# EUROPEAN PATENT APPLICATION

(11) **EP 4 576 836 A1**
(43) Date of publication of application: **25.06.2025**
(21) Application number: 22959739.8
(22) Date of filing: 26.09.2022
(51) Int. Cl.: H04W 4/02

(54) **TERMINAL DISCOVERY METHOD, APPARATUS AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: GUO, Yali, Dongguan, Guangdong 523860 (CN); LU, Fei, Dongguan, Guangdong 523860 (CN)
(74) Representative: Novagraaf Technologies
(86) International application number: PCT/CN2022/121331
(87) International publication number: WO 2024/065087

(57) **Abstract**

The present application relates to the technical field of communications. Disclosed are a terminal discovery method, apparatus and device and a storage medium. The method is executed by a first relay terminal, and comprises: receiving a first discovery message sent by a second relay terminal, wherein the first discovery message is used by the first relay terminal to instruct a first terminal to discover a second terminal by means of the first relay terminal.

## Description

The present disclosure relates to the technical field of communications, and in particular, relates to a terminal discovery method, a terminal discovery apparatus, and a device and a storage medium thereof.

### RELATED ART

In the 5^{th} Generation (5G) communication, in the case that a first terminal needs to establish a communication connection with a second terminal, and the first terminal is incapable of performing direct near field communication with the second terminal, the second terminal may be discovered via a relay terminal, and the communication connection with the second terminal may be further established via the relay terminal.

### SUMMARY

Embodiments of the present disclosure provide a terminal discovery method, a terminal discovery apparatus, and a device and a storage medium thereof, which achieves that a first terminal discovers a second terminal via not less than two relay terminals. The technical solutions are as follows.

According to some embodiments of the present disclosure, a terminal discovery method is provided. The method is applicable to a first relay terminal. The method includes:
receiving a first discovery message from a second relay terminal, wherein the first discovery message is used by the first relay terminal to instruct a first terminal to discover a second terminal via the first relay terminal.

According to some embodiments of the present disclosure, a terminal discovery method is provided. The method is applicable to a first terminal. The method includes:
receiving a second discovery message from a first relay terminal, wherein the second discovery message is used for instructing the first terminal to discover a second terminal via the first relay terminal.

According to some embodiments of the present disclosure, a terminal discovery apparatus is provided. The apparatus includes:
a receiving module, configured to receive a first discovery message from a second relay terminal, wherein the first discovery message is used by a first relay terminal to instruct a first terminal to discover a second terminal via the first relay terminal.

According to some embodiments of the present disclosure, a terminal discovery apparatus is provided. The apparatus includes:
a receiving module, configured to receive a second discovery message from a first relay terminal, wherein the second discovery message is used to instruct a first terminal to discover a second terminal via the first relay terminal.

According to some embodiments of the present disclosure, a first relay terminal is provided. The first relay terminal includes a memory and a processor. The memory is configured to store at least one program code. The processor, when loading and running the at least one program code, causes the first relay terminal to perform the terminal discovery method described above.

According to some embodiments of the present disclosure, a first terminal is provided. The first terminal includes a memory and a processor. The memory is configured to store at least one program code. The processor, when loading and running the at least one program code, causes the first terminal to perform the terminal discovery method described above.

According to some embodiments of the present disclosure, a computer-readable storage medium is provided. The storage medium stores one or more computer programs. The one or more computer programs, when loaded and run by a processor, cause the processor to perform the terminal discovery method described above.

According to some embodiments of the present disclosure, a chip is provided. The chip includes a programmable logic circuit and/or one or more program instructions. An electronic device equipped with the chip, when running, is caused to perform the terminal discovery method described above.

According to some embodiments of the present disclosure, a computer program product is provided. The computer program product includes one or more computer instructions stored in a computer-readable storage medium. The one or more computer instructions, when read from the computer-readable storage medium and run by a processor, cause the processor to perform the terminal discovery method described above.

The technical solutions according to the embodiments of the present disclosure achieve at least the following beneficial effects:
By receiving the first discovery message from the second relay terminal, the first relay terminal may instruct the first terminal to discover the second terminal via the first relay terminal. Based on the first discovery message, a communication path between the first terminal and the second terminal may also be selected, such that the first terminal is capable of communicating with the second terminal via the first relay terminal, or the first terminal is capable of communicating with the second terminal via the first relay terminal and the second relay terminal in sequence.

### BRIEF DESCRIPTION OF THE DRAWINGS

For clearer descriptions of the technical solutions according to the embodiments of the present disclosure, the accompanying drawings required for describing the embodiments are briefly introduced hereinafter. Apparently, the accompanying drawings in the following description show merely some embodiments of the present disclosure, and those of ordinary skill in the art may still derive other drawings from these accompanying drawings without creative efforts.
FIG. 1 is a schematic diagram of a 5G network architecture according to some embodiments of the present disclosure;
FIG. 2 is a schematic diagram for establishing communication according to some embodiments of the present disclosure;
FIG. 3 is a schematic diagram for implementing relay communication according to some embodiments of the present disclosure;
FIG. 4 is a schematic diagram for failing to implement relay communication according to some embodiments of the present disclosure;
FIG. 5 is a flowchart of a terminal discovery method according to some embodiments of the present disclosure;
FIG. 6 is a flowchart of a terminal discovery method according to some embodiments of the present disclosure;
FIG. 7 is a flowchart of a terminal discovery method according to some embodiments of the present disclosure;
FIG. 8 is a flowchart of a terminal discovery method according to some embodiments of the present disclosure;
FIG. 9 is a flowchart of a terminal discovery method according to some embodiments of the present disclosure;
FIG. 10 is a schematic diagram of a terminal discovery apparatus according to some embodiments of the present disclosure;
FIG. 11 is a schematic diagram of a terminal discovery apparatus according to some embodiments of the present disclosure; and
FIG. 12 is a schematic structural diagram of a communication device according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

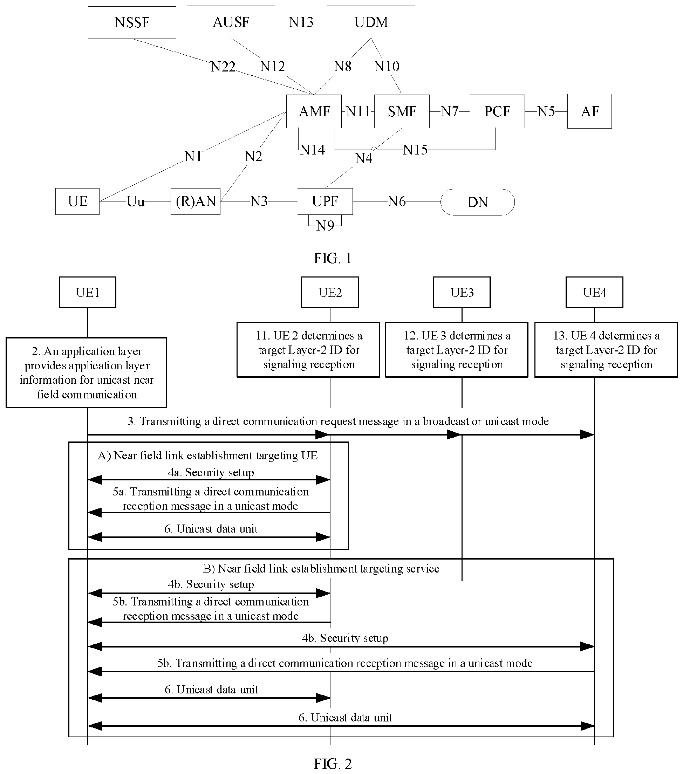

FIG. 1 is a schematic diagram of a 5G network architecture according to some embodiments of the present disclosure.

The 5G network system includes: a user equipment (UE)/mobile terminal, a (radio) access network ((R)AN), a user plane function (UPF), a data network (DN), and a control plane function.

The control plane function includes: an access and mobility management function (AMF), a session management function (SMF), a policy control function (PCF), a unified data manager (UDM), an application function (AF), a network slice selection function (NSSF), and an authentication server function (AUSF).

The UE establishes an access stratum connection to the AN over a Uu air interface to implement access stratum messages interaction and wireless data transmission, and the UE establishes a non-access stratum (NAS) connection to the AMF over an N1 interface to implement NAS messages interaction. The AMF is a mobility management function in a core network, the SMF is a session management function in the core network. The AMF is responsible for forwarding messages related to session management between the UE and the SMF in addition to performing mobility management on the UE. The PCF is a policy management function in the core network, and is responsible for formulating policies related to mobility management, session management, charging, and the like for the UE. The UPF is a user plane function in the core network, and performs data transmission with an external data network over an N6 interface and with the AN over an N3 interface.

FIG. 2 is a schematic diagram for establishing communication according to some embodiments of the present disclosure. A UE 1, a UE 2, a UE 3, and a UE 4 represent different terminals, respectively, and a terminal having a proximity based service (Prose) capability may directly communicate with another terminal having a near field communication capability over a PC5 interface.

Referring to FIG. 2, using the UE 1 as an example, the UE 1 may transmit a request to a plurality of UEs to establish PC5 connection, which specifically includes the following steps:
In step 11, the UE 2 determines a layer-2 identifier (layer-2 ID) for signaling reception.
Step 12 and step 13 are similar to step 11 and thus are not described herein any further.

In step 2, an application layer provides the UE 1 with application layer information for unicast near field communication.

In step 3, the UE 1 transmits a direct communication request message to the UE 2 in a broadcast or unicast mode.

Exemplarily, the direct communication request message is used by the UE 1 to request the UE 2 to establish communication.

Using the establishment of near field communication between the UE 1 and the UE 2 as an example, in the case of establishing a near field link targeted for the UE, the following steps are performed:
In step 4a, the UE 1 performs security setup with the UE 2.
In step 5a, the UE 2 transmits a direct communication reception message to the UE 1 in a unicast mode.
In step 6, the UE 1 performs transmission of a unicast data unit with the UE 2.

Using a scenario where the UE 1 needs to establish service communication with the UE 2 and the UE 4 as an example, in the case of establishing a near field link targeted for a service, the following steps are performed:
In step 4b, the UE 1 performs security setup with the UE 2 and the UE 4, respectively.
In step 5b, the UE 2 and the UE 4 transmit a direct communication reception message to the UE 1 in a unicast mode, respectively.
In step 6, the UE 1 performs transmission of a unicast data unit with the UE 2 and the UE 4, respectively.

Exemplarily, the direct communication reception message is used for instructing the UE 2 to establish communication with the UE 1.

In some embodiments, in the case that two UEs with near field communication capability are far away from each other, and thus the two UEs fail to establish communication directly over the PC5 interface, a relay terminal (Relay UE) with near field communication capability may also be configured for communication transfer.

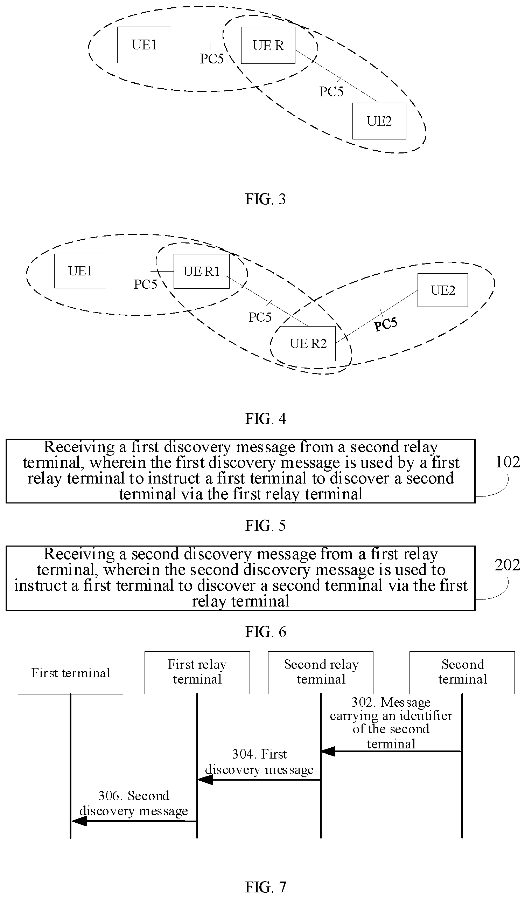

FIG. 3 is a schematic diagram for implementing relay communication according to some embodiments of the present disclosure. Using the direct communication between the UE 1 and the UE 2 as an example, a relay terminal (i.e., UE R in FIG. 3) may directly communicate with the UE 1 over the PC5 interface, and may also directly communicate with the UE 2 over the PC5 interface, such that the UE 1 and the UE 2 may perform service interaction via the relay terminal.

Based on FIG. 3, FIG. 4 is a schematic diagram for failing to implement relay communication according to some embodiments of the present disclosure. Still using the direct communication between the UE 1 and the UE 2 as an example, no relay terminal is present between the UE 1 and the UE 2 that is both proximal to the UE 1 and proximal to the UE 2. In the related art, communication between the UE 1 and the UE 2 via a delay terminal is only supported, that is, the UE 1 is incapable of communicating with the UE 2 via a first relay terminal (i.e., UE R1 in the figure). Referring to FIG. 4, a second relay terminal (i.e., UE R2 in the figure) is also needed between the first relay terminal and the UE 2 to enable the establishment or modification of the communication between a first terminal and a second terminal.

The present disclosure provides a terminal discovery method, such that the UE 1 is capable of discovering the UE 2 via a first relay terminal and a second relay terminal, and a first terminal is further capable of establishing communication with the UE 2 via the first relay terminal and the second relay terminal. It should be understood that, in the embodiments of the present disclosure, only using a scenario where terminal discovery and/or communication establishment is performed between the first terminal and the second terminal via two relay terminals as an example, a case that more than two relay terminals exist between the first terminal and the second terminal is similar to the scenario, which may be implemented by referring to the following contents. The details are not described herein any further.

FIG. 5 is a flowchart of a terminal discovery method according to some embodiments of the present disclosure. The method is applicable to a first relay terminal. The method includes the following processes.

**In process 102,** a first discovery message from a second relay terminal is received.

Exemplarily, the first discovery message is used by the first relay terminal to instruct a first terminal to discover a second terminal via the first relay terminal.

In some embodiments, the first discovery message may also be understood as being used by the first relay terminal to instruct the first terminal to discover the second terminal at least via the first relay terminal. The first terminal may directly discover the second terminal via the first relay terminal, or the first terminal may discover the second terminal via the first relay terminal and at least one second relay terminal. For example, after receiving the first discovery message, the first relay terminal generates a second discovery message based on the first discovery message, and transmits the second discovery message to the first terminal to inform the first terminal that the first terminal may discover the second terminal at least via the first relay terminal.

Referring to the above content, in the case that terminal discovery and communication establishment between the first terminal and the second terminal fail to be achieved directly via the first relay terminal, at least one second relay terminal is needed for communication between the first relay terminal and the second terminal. Based on this, the second relay terminal transmits the first discovery message to the first relay terminal, such that the first relay terminal informs the first terminal that the first terminal may discover the second terminal via the first relay terminal.

In some embodiments, the discovery message is a discovery declaration message, or the discovery message is a discovery response message.

The discovery message is a message transmitted by a transmitter end in a broadcast mode, and is used by the transmitter end to actively inform a receiver end that terminal discovery and/or communication establishment may be achieved; and the discovery response message is a reply to a discovery request message, that is, after receiving the discovery request message from the receiver end, the transmitter end may transmit the discovery response message to the receiver end to passively inform the receiver end that terminal discovery and/or communication establishment may be achieved.

Exemplarily, the first discovery message is a first discovery declaration message or a first discovery response message. The first discovery declaration message is a message actively transmitted by the second relay terminal in a broadcast mode, and the first discovery response message is a reply of the second relay terminal to a first discovery request message transmitted by the first relay terminal.

In some embodiments, a message content and/or a link layer packet structure of the first discovery message carries an identifier of the second terminal. The identifier of the second terminal includes a user identifier, and/or a layer-2 identifier of the second terminal. Exemplarily, the message content of the first discovery message carries the user identifier of the second terminal in an application layer, and/or the link layer packet structure of the first discovery message carries the layer-2 identifier of the second terminal.

In some embodiments, in order to enable the first terminal to discover the second terminal, after receiving the first discovery message from the second relay terminal, the first relay terminal generates a second discovery message based on the first discovery message and transmits the second discovery message to the first terminal.

The second discovery message is used for instructing the first terminal to discover the second terminal via the first relay terminal. In some embodiments, the second discovery message carries the identifier of the second terminal, or the second discovery message carries an identifier of the first relay terminal and the identifier of the second terminal. It should also be understood that the second discovery message at least carries the identifier of the second terminal. Similar to the identifier of the second terminal, the identifier of the first relay terminal comprises a user identifier and/or a layer-2 identifier of the first relay terminal. The layer-2 identifier of the first relay terminal is optionally carried in a link layer packet structure of the second discovery message.

Referring to the above content, the first relay terminal and the second relay terminal are present between the first terminal and the second terminal, and the first terminal may discover the second terminal via the first relay terminal. Subsequently, in the case that a communication path needs to be established or modified between the first terminal and the second terminal, the communication path may be established or modified in the following two implementation modes:
Implementation mode 1: The first terminal communicates with the second terminal via the first relay terminal.
Implementation mode 2: The first terminal communicates with the second terminal via the first relay terminal and the second relay terminal sequentially.

The two above modes may be selected by the first relay terminal or the first terminal.

In some embodiments, after receiving the first discovery message, the first relay terminal performs path selection, determines the second relay terminal as a node on the communication path between the first relay terminal and the second terminal, and stores first path information, wherein the first path information includes an identifier of the second relay terminal.

Subsequently, the first relay terminal generates the second discovery message based on the first discovery message and transmits the second discovery message to the first terminal. In the case that the first terminal needs to establish communication with the second terminal, the first terminal transmits a first request message to the first relay terminal so as to request to establish or modify the communication path directed to the second terminal via the first relay terminal. After receiving the first request message, the first relay terminal may transmit a second request message to the second relay terminal based on the first path information so as to request to establish or modify the communication path directed to the second terminal via the second relay terminal.

That is, path selection is performed by the first relay terminal to determine whether the second relay terminal is determined as the node on the communication path between the first terminal and the second terminal. It should be understood that the first relay terminal may also not determine the second relay terminal as the node on the communication path between the first terminal and the second terminal, in this case, the first relay terminal may store second path information, the second path information including the identifier of the second terminal. Subsequently, after receiving the first request message from the first terminal, the first relay terminal directly establishes or modifies the communication path directed to the second terminal based on the second path information.

In some embodiments, after receiving the first discovery message, the first relay terminal directly generates the second discovery message based on the first discovery message. In this case, the second discovery message further carries the identifier of the second relay terminal. The identifier of the second relay terminal indicates that the second relay terminal is a candidate node on the communication path between the first relay terminal and the second terminal.

Subsequently, the first relay terminal transmits the second discovery message to the first terminal, the second discovery message carries the identifier of the second terminal and the identifier of the second relay terminal. Alternatively, the second discovery message carries the identifier of the second terminal, the identifier of the first relay terminal, and the identifier of the second relay terminal. In the case that the first terminal needs to establish communication with the second terminal, the first terminal transmits a third request message to the first relay terminal so as to instruct the first relay terminal to establish or modify the communication path directed to the second terminal via the second relay terminal. After receiving the third request message, the first relay terminal may transmit a fourth request message to the second relay terminal so as to request to establish or modify the communication path directed to the second terminal via the second relay terminal.

That is, path selection is performed by the first terminal to determine whether the second relay terminal is determined as the node on the communication path between the first terminal and the second terminal. It should be understood that the first terminal may also not determine the second relay terminal as the node on the communication path between the first terminal and the second terminal. In this case, the first terminal transmits a fifth request message to the first relay terminal, and the fifth request message is used for instructing to establish or modify communication connection with the second terminal by the first relay terminal. Subsequently, the first relay terminal may directly establish or modify the communication path directed to the second terminal based on the fifth request message.

Using a scenario where the first terminal is a UE 1, the first relay terminal is a relay terminal 1, the second relay terminal is a relay terminal 2, and the second terminal is a UE 2 an example, the terminal discovery method according to the embodiments of the present disclosure may be implemented as one of the following two optional implementation modes:
Implementation mode 1: The relay terminal 2 transmits the first discovery message to the relay terminal 1. In some embodiments, the relay terminal 1 determines the relay terminal 2 as a node on a communication path between the relay terminal 1 and the UE 2, and stores first path information, wherein the first path information includes an identifier of the relay terminal 2; and the relay terminal 1 generates a second discovery message based on the first discovery message, and transmits the second discovery message to the UE 1, wherein the second discovery message carries an identifier of the UE 2, or the second discovery message carries the identifier of the UE 2 and an identifier of the relay terminal 1. Subsequently, the UE 1 transmits a first request message to the relay terminal 1, the relay terminal 1 transmits a second request message to the relay terminal 2 based on the first path information, and the relay terminal 2 establishes or modifies the communication path with the UE 2. Based on this, the UE 1 communicates with the UE 2 via the relay terminal 1 and the relay terminal 2 sequentially.
Implementation mode 2: The relay terminal 2 transmits the first discovery message to the relay terminal 1. In some embodiments, the relay terminal 1 generates the second discovery message based on the first discovery message, and transmits the second discovery message to the UE 1, wherein the second discovery message carries the identifier of the UE 2 and the identifier of the relay terminal 2, or the second discovery message carries the identifier of the relay terminal 1, the identifier of the relay terminal 2, and the identifier of the UE 2. Subsequently, the UE 1 determines the relay terminal 2 as the node on the communication path between the relay terminal 1 and the UE 2, and transmits a third request message to relay terminal 1. The relay terminal 1 may determine, according to the third request message, that the UE 1 instructs to achieve communication with the UE 2 via the relay terminal 2, then the relay terminal 1 transmits a fourth request message to the relay terminal 2, and the relay terminal 2 establishes or modifies the communication path with the UE 2. Based on this, the UE 1 communicates with UE 2 via the relay terminal 1 and the relay terminal 2 sequentially.

It should be understood that, in the above two implementation modes, the number of relay terminals 2 is not less than one. That is, in implementation mode 1, the relay terminal 1 may receive the first discovery messages from a plurality of relay terminals 2, and the relay terminal 1 selects one relay terminal 2 from the plurality of relay terminals 2 as the node on the communication path between the relay terminal 1 and the UE 1. In implementation mode 2, the second discovery message transmitted by the relay terminal 1 to the UE 1 carries identifiers of the plurality of relay terminals 2, and the UE 1 selects one relay terminal 2 from the plurality of relay terminals 2 as the node on the communication path between the relay terminal 1 and the UE 1. Moreover, in implementation mode 2, the identifier of the relay terminal 2 selected by the UE 1 and the identifier of the UE 2 are carried in the third request message transmitted by the UE 1 to the relay terminal 1.

In summary, in the terminal discovery method according to the embodiments of the present disclosure, by receiving the first discovery message from the second relay terminal, the first relay terminal may instruct the first terminal to discover the second terminal via the first relay terminal. Based on the first discovery message, the communication path between the first terminal and the second terminal may also be selected, such that the first terminal achieves communication with the second terminal via the first relay terminal, or the first terminal achieves communication with the second terminal via the first relay terminal and the second relay terminal in sequence.

FIG. 6 is a flowchart of a terminal discovery method according to some embodiments of the present disclosure. The method is applicable to a first terminal. The method includes the following processes.

**In process 202,** a second discovery message from a first relay terminal is received.

Exemplarily, the second discovery message is used for instructing the first terminal to discover a second terminal via the first relay terminal.

Referring to the above content, in the case that terminal discovery and communication establishment between the first terminal and the second terminal fail to be achieved directly via the first relay terminal, at least one second relay terminal is needed for communication between the first relay terminal and the second terminal. After receiving a first discovery message from the second relay terminal, the first relay terminal generates the second discovery message based on the first discovery message and transmits the second discovery message to the first terminal. For the related contents of the first discovery message, reference may be made to the above content. The details are not described herein any further.

Similar to the first discovery message, the second discovery message is a second discovery declaration message or a second discovery response message. The second discovery declaration message is a message actively transmitted by the first relay terminal in a broadcast mode, and the second discovery response message is a reply of the first relay terminal to a second discovery request message transmitted by the first terminal.

In some embodiments, the second discovery message carries an identifier of the second terminal, or the second discovery message carries an identifier of the first relay terminal and the identifier of the second terminal. The identifier of the terminal or relay terminal includes a user identifier, and/or a layer-2 identifier. The layer-2 identifier of the first relay terminal is optionally carried in a link layer packet structure of the second discovery message.

Referring to the above content, the first terminal may discover the second terminal via the first relay terminal. Subsequently, in the case that a communication path needs to be established or modified between the first terminal and the second terminal, the communication path may be established or modified in the following two implementation modes:
Implementation mode 1: The first terminal achieves communication with the second terminal via the first relay terminal.
Implementation mode 2: The first terminal achieves communication with the second terminal via the first relay terminal and the second relay terminal sequentially.

For the related description of the above two implementation modes, reference may be made to the above content. The details are not described herein any further.

Using a scenario where the first terminal is a UE 1, the first relay terminal is a relay terminal 1, the second relay terminal is a relay terminal 2, and the second terminal is a UE 2 an example, the terminal discovery method according to the embodiments of the present disclosure may be implemented as one of the following two optional implementation modes:
Implementation mode 1: The relay terminal 2 transmits the first discovery message to the relay terminal 1. In some embodiments, the relay terminal 1 determines the relay terminal 2 as a node on a communication path between the relay terminal 1 and the UE 2, and stores first path information, wherein the first path information includes an identifier of the relay terminal 2; and the relay terminal 1 generates a second discovery message based on the first discovery message, and transmits the second discovery message to the UE 1, wherein the second discovery message carries an identifier of the UE 2, or the second discovery message carries the identifier of the UE 2 and an identifier of the relay terminal 1. Subsequently, the UE 1 transmits a first request message to the relay terminal 1, the relay terminal 1 transmits a second request message to the relay terminal 2 based on the first path information, and the relay terminal 2 establishes or modifies the communication path with the UE 2. Based on this, the UE 1 communicates with the UE 2 via the relay terminal 1 and the relay terminal 2 sequentially.
Implementation mode 2: The relay terminal 2 transmits the first discovery message to the relay terminal 1. In some embodiments, the relay terminal 1 generates the second discovery message based on the first discovery message, and transmits the second discovery message to the UE 1, wherein the second discovery message carries the identifier of the UE 2 and the identifier of the relay terminal 2, or the second discovery message carries the identifier of the relay terminal 1, the identifier of the relay terminal 2, and the identifier of the UE 2. Subsequently, the UE 1 determines the relay terminal 2 as the node on the communication path between the relay terminal 1 and the UE 2, and transmits a third request message to the relay terminal 1; and the relay terminal 1 may determine, based on the third request message, that the UE 1 instructs to achieve communication with the UE 2 via the relay terminal 2, then the relay terminal 1 transmits a fourth request message to the relay terminal 2, and the relay terminal 2 establishes or modifies the communication path with the UE 2. Based on this, the UE 1 communicates with the UE 2 via the relay terminal 1 and the relay terminal 2 sequentially.

It should be understood that, in the above two implementation modes, the number of relay terminals 2 is not less than one. That is, in implementation mode 1, the relay terminal 1 may receive the first discovery messages from a plurality of relay terminals 2, and the relay terminal 1 selects one relay terminal 2 from the plurality of relay terminals 2 as the node on the communication path between the relay terminal 1 and the UE 1. In implementation mode 2, the second discovery message transmitted by the relay terminal 1 to the UE 1 carries identifiers of the plurality of relay terminals 2, and the UE 1 selects one relay terminal 2 from the plurality of relay terminals 2 as the node on the communication path between the relay terminal 1 and the UE 1. Moreover, in implementation mode 2, the identifier of the relay terminal 2 selected by the UE 1 and the identifier of the UE 2 are carried in the third request message transmitted by the UE 1 to the relay terminal 1.

In summary, in the terminal discovery method according to the embodiments of the present disclosure, by receiving the second discovery message from the first relay terminal, the first terminal may discover the second terminal via the first relay terminal. Based on the first discovery message, the communication path between the first terminal and the second terminal may also be selected, such that the first terminal is capable of communicating with the second terminal via the first relay terminal, or the first terminal is capable of communicating with the second terminal via the first relay terminal and the second relay terminal in sequence.

FIG. 7 is a flowchart of a terminal discovery method according to some embodiments of the present disclosure. The method includes the following processes.

**In process 302,** a second terminal transmits a message carrying an identifier of the second terminal to a second relay terminal.

Exemplarily, the message carrying the identifier of the second terminal is a discovery declaration message, or a discovery response message.

In some embodiments, the second terminal actively transmits the discovery declaration message carrying the identifier of the second terminal in a broadcast mode. In some embodiments, after receiving a discovery request message from the second relay terminal, the second terminal transmits the discovery response message carrying the identifier of the second terminal to the second relay terminal.

The identifier of the second terminal includes a user identifier, and/or a layer-2 identifier of the second terminal. For example, the discovery declaration message or the discovery response message carries the user identifier of the second terminal in an application layer, or a link layer packet structure of the discovery declaration message or the discovery response message carries the layer-2 identifier of the second terminal.

Referring to the above content, in the case that terminal discovery and communication establishment between the first terminal and the second terminal fails to be achieved directly via the first relay terminal, at least one second relay terminal is needed for communication between the first relay terminal and the second terminal. Based on this, process 304 is performed, which is specifically as follows.

**In process 304,** the second relay terminal transmits a first discovery message to the first relay terminal.

Exemplarily, the first discovery message is used by the first relay terminal to instruct a first terminal to discover a second terminal via the first relay terminal.

Exemplarily, the first discovery message is a first discovery declaration message or a first discovery response message. The first discovery declaration message is a message actively transmitted by the second relay terminal in a broadcast mode, and the first discovery response message is a reply of the second relay terminal to a first discovery request message transmitted by the first relay terminal.

Similar to process 302, the first discovery declaration message or the first discovery response message carries the user identifier of the second terminal in the application layer, and/or a link layer packet structure of the first discovery declaration message or the first discovery response message carries the layer-2 identifier of the second terminal.

In some embodiments, the first discovery message further carries an identifier of the second relay terminal, wherein the identifier of the second relay terminal includes a user identifier and/or a layer-2 identifier of the second relay terminal. That is, the first discovery declaration message or the first discovery response message carries the user identifier of the second relay terminal in the application layer, and/or the link layer packet structure of the first discovery declaration message or the first discovery response message carries the layer-2 identifier of the second relay terminal.

As process 304 is the same as process 102. For details of process 304, reference may be made to process 102, which are not described herein.

In order to enable the first terminal to discover the second terminal, after receiving the first discovery message from the second relay terminal, the first relay terminal generates a second discovery message based on the first discovery message and transmits the second discovery message to the first terminal. Based on this, process 306 is performed, which is specifically as follows.

**In process 306,** the first relay terminal transmits the second discovery message to the first terminal.

Exemplarily, the second discovery message is used for instructing the first terminal to discover a second terminal via the first relay terminal.

Similar to the first discovery message, the second discovery message is a second discovery declaration message or a second discovery response message. The second discovery declaration message is a message actively transmitted by the first relay terminal in a broadcast mode, and the second discovery response message is a reply of the first relay terminal to a second discovery request message transmitted by the first terminal.

In some embodiments, the second discovery message carries the identifier of the second terminal, or the second discovery message carries an identifier of the first relay terminal and the identifier of the second terminal. The identifier of the terminal or relay terminal includes a user identifier, and/or a layer-2 identifier. The layer-2 identifier of the first relay terminal is optionally carried in a link layer packet structure of the second discovery message.

Referring to the above content, the first relay terminal and the second relay terminal are present between the first terminal and the second terminal, and the first terminal may discover the second terminal via the first relay terminal. Subsequently, in the case that a communication path needs to be established or modified between the first terminal and the second terminal, the communication path may be established or modified in the following two implementation modes:
Implementation mode 1: The first terminal achieves communication with the second terminal via the first relay terminal.
Implementation mode 2: The first terminal achieves communication with the second terminal via the first relay terminal and the second relay terminal sequentially.

For the related description of the above two implementation modes, reference may be made to the above content.

As process 306 is the same as process 202. For details of process 306, reference may be made to process 202, which are not described herein.

It should be understood that the processes at the second relay terminal side, the first relay terminal side, and the first terminal side are separately implemented as the embodiments of the terminal discovery method. For specific description, reference may be made to the above content. The details are not described herein any further.

In summary, in the terminal discovery method according to the embodiments of the present disclosure, the first terminal may discover the second terminal via the first relay terminal by transmission of the first discovery message and the second discovery message. Based on the first discovery message and the second discovery message, the communication path between the first terminal and the second terminal may also be selected, such that the first terminal is capable of communicating with the second terminal via the first relay terminal, or the first terminal is capable of communicating with the second terminal via the first relay terminal and the second relay terminal in sequence.

Referring to the above content, two optional implementation modes of the communication path are present between the first terminal and the second terminal. The path selection may be performed by the first relay terminal, or may be performed by the first terminal, and the specific description is as follows.

### I. Path selection is performed by the first relay terminal.

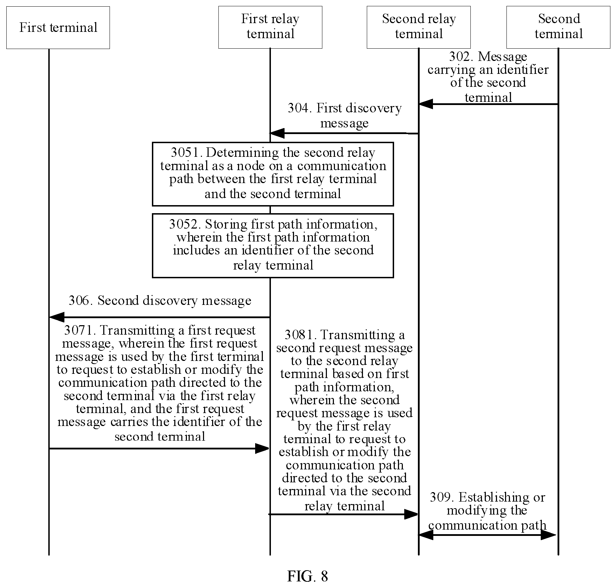

Based on FIG. 7, FIG. 8 is a flowchart of a terminal discovery method according to some embodiments of the present disclosure. The method further includes the following processes.

**In process 3051:** the first relay terminal determines the second relay terminal as a node on a communication path between the first relay terminal and the second terminal.

There are n second relay terminals between the first relay terminal and the second terminal, wherein n is a positive integer greater than 0. After receiving first discovery messages transmitted by the n second relay terminals, the first relay terminal may determine one of the n second relay terminals as the node on the communication path between the first relay terminal and the second terminal.

In some embodiments, path selection performed by the first relay terminal may be performed based on at least one of the following information:
a quality of a wireless signal;
a strength of the wireless signal;
distance information between any two terminals of the second terminal, the first terminal, the first relay terminal, and the second relay terminal;
a user preference corresponding to the terminal or the relay terminal; or
authorization information corresponding to the terminal or the relay terminal.

Using a scenario where the first terminal is a UE 1, the first relay terminal is a relay terminal 1, the second relay terminal is a relay terminal 2, and the second terminal is a UE 2 as an example:

The relay terminal 1 may receive the first discovery message from the relay terminal 2, wherein the first discovery message carries an identifier of the UE 2; or, the relay terminal 1 may also receive the first discovery message from another relay terminal, for example, a relay terminal x; or, the relay terminal 1 may also receive a discovery declaration message or a discovery response message including the identifier of the UE 2 directly from the UE 2. The relay terminal x is another relay terminal except the relay terminal 2 among the n second relay terminals. Subsequently, the relay terminal 1 performs path selection. For example, the relay terminal 1 selects to directly interact with the UE 2; or relay terminal 1 selects relay terminal 2 as a relay terminal for the UE 1 to reach the UE 2.

**In process 3052,** the first relay terminal stores first path information, and the first path information includes an identifier of the second relay terminal.

After path selection, the first relay terminal may store the first path information. The first path information may also be understood as a mapping relationship or an association relationship between the second relay terminal and the second terminal.

In some embodiments, after determining the second relay terminal as the node on the communication path between the first relay terminal and the second terminal, the first relay terminal directly stores the following information: the identifier of the second relay terminal and the identifier of the second terminal, and/or the mapping relationship between the second relay terminal and the second terminal, and/or the association relationship between the second relay terminal and the second terminal.

Still Using the scenario where the first terminal is a UE 1, the first relay terminal is a relay terminal 1, the second relay terminal is a relay terminal 2, and the second terminal is a UE 2 as the example: in the case that the relay terminal 1 selects to directly interact with the UE 2, the relay terminal 1 stores a user identifier of the UE 2 and a layer-2 identifier corresponding to the UE 2; or, in the case that the relay terminal 1 selects the relay terminal 2 as the relay terminal that reaches the UE 2, the relay terminal 1 stores the user identifier of the UE 2, a user identifier of the relay terminal 2, the layer-2 identifier of the UE 2, and a layer-2 identifier of the relay terminal 2.

**In process 3071,** the first terminal transmits a first request message to the first relay terminal.

Exemplarily, the first request message is used by the first terminal to request to establish or modify the communication path directed to the second terminal via the first relay terminal, wherein the first request message carries the identifier of the second terminal.

According to process 3051 and process 3052, in the case that n second relay terminals are present between the first relay terminal and the second terminal, the first relay terminal actively performs path selection to determine the communication path between the first relay terminal and the second terminal. Subsequently, in the case that the first terminal needs to communicate with the second terminal, the first terminal may transmit the first request message to the first relay terminal, such that the first relay terminal may establish or modify the communication path directed to the second terminal determined by the first relay terminal based on the stored first path information.

**In process 3081,** the first relay terminal transmits a second request message to the second relay terminal based on the first path information.

Exemplarily, the second request message is used by the first relay terminal to request to establish or modify the communication path directed to the second termina via the second relay terminal.

Referring to the above content, the first path information may also be understood as a mapping relationship or an association relationship between the second relay terminal and the second terminal. In some embodiments, the first path information includes: the identifier of the second relay terminal and the identifier of the second terminal, and/or the mapping relationship between the second relay terminal and the second terminal, and/or the association relationship between the second relay terminal and the second terminal.

In the case that n second relay terminals are present between the first relay terminal and the second terminal, the communication path between the first relay terminal and the second terminal may be determined based on the first path information. It should be understood that the first relay terminal may directly communicate with the second terminal, or the first relay terminal may communicate with the second terminal via one of the n second relay terminals.

**In process 309:** the second relay terminal establishes or modifies the communication path directed to the second terminal.

After receiving the second request message, the second relay terminal and the second terminal may establish or modify the communication path, such that the first terminal may communicate with the second terminal via the first relay terminal and the second relay terminal sequentially.

It should be understood that the embodiments of the present disclosure only illustrate an implementation mode in which the first terminal communicates with the second terminal via the first relay terminal and the second relay terminal sequentially. In some embodiments, the first relay terminal may also not determine the second relay terminal as the node on the communication path between the first terminal and the second terminal, in this case, the first relay terminal may store second path information, the second path information including the identifier of the second terminal.

In this case, the second path information may also be understood as a mapping relationship or an association relationship between the first relay terminal and the second terminal. In some embodiments, the first path information includes: the identifier of the second terminal, and/or the mapping relationship between the first relay terminal and the second terminal, and/or the association relationship between the first relay terminal and the second terminal.

Subsequently, after receiving the first request message, the first relay terminal may directly establish or modify the communication path directed to the second terminal based on the second path information. In this case, process3081 and process 309 are not performed.

It should be understood that the processes at the second relay terminal side, the first relay terminal side, and the first terminal side are separately implemented as the embodiments of the terminal discovery method. For specific description, reference may be made to the above content. The details are not described herein any further.

In summary, in the terminal discovery method according to the embodiments of the present disclosure, after receiving the first discovery message, the first relay terminal may further actively perform path selection, and store the first path information, so as to prepare for the establishment or modification of the subsequent communication path.

In some embodiments, after discovering the second terminal via the first relay terminal, the first terminal transmits the first request message to the first relay terminal, the first request message being used by the first relay terminal to establish or modify the communication path directed to the second terminal based on the first path information, such that the first terminal is capable of communicating with the second terminal via at least two relay terminals.

### II. Path selection is performed by the first terminal.

Referring to the above content, n second relay terminals are present between the first relay terminal and the second terminal, wherein n is a positive integer greater than 0. After receiving first discovery messages from the n second relay terminals, the first relay terminal may generate a second discovery message based on the first discovery messages. In some embodiments, the second discovery message further carries identifiers of the second relay terminals in addition to the identifier of the second terminal, or the identifier of the first relay terminal and the identifier of the second terminal, wherein the identifier of the second relay terminal indicates that the second relay terminal is a candidate node on the communication path between the first relay terminal and the second terminal.

That is, the second discovery message carries the identifiers of the n second relay terminals, and the identifier of the i^{th} second relay terminal indicates that the i^{th} second relay terminal is the candidate node on the communication path between the first relay terminal and the second terminal. After receiving the second discovery message, the first terminal may select one second relay terminal from the n second relay terminals as the node on the communication path between the first relay terminal and the second terminal, or may select to establish or modify the communication path directed to the second terminal directly via the first relay terminal rather than any second relay terminal.

The following describes that the first terminal selects one second relay terminal from the n second relay terminals as the node on the communication path between the first relay terminal and the second terminal.

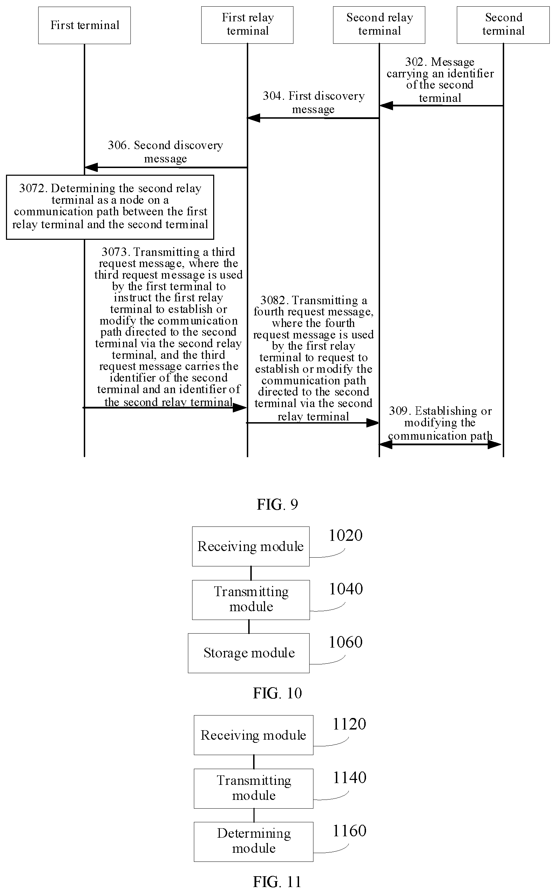

Based on FIG. 7, FIG. 9 is a flowchart of a terminal discovery method according to some embodiments of the present disclosure. The method further includes the following processes.

**In process 3072:** the first terminal determines the second relay terminal as the node on the communication path between the first relay terminal and the second terminal.

After receiving the second discovery message, the first terminal may know the candidate node on the communication path between the first relay terminal and the second terminal. That is, the first terminal knows that n second relay terminals are present between the first relay terminal and the second terminal, and each of the n second relay terminals may be used as a node in the communication connection between the first relay terminal and the second terminal. Subsequently, the first terminal may determine one of the n second relay terminals as the node on the communication path between the first relay terminal and the second terminal.

In some embodiments, path selection performed by the first relay terminal may be performed based on at least one of the following information: a quality of a wireless signal; a strength of the wireless signal; distance information between any two terminals of the second terminal, the first terminal, the first relay terminal, and the second relay terminal; a user preference corresponding to the terminal or the relay terminal; and authorization information corresponding to the terminal or the relay terminal.

Using a scenario where the first terminal is a UE 1, the first relay terminal is a relay terminal 1, the second relay terminal is a relay terminal 2, and the second terminal is a UE 2 an example: in the embodiments, the second discovery message transmitted by the relay terminal 1 to the UE 1 may further carry a plurality of pieces of optional path information. For example, in the case that a path 1 indicates that the relay terminal 1 directly interacts with the UE 2, the second discovery message carries an identifier of the relay terminal 1 and an identifier of the UE 2. In the case that a path 2 indicates that the relay terminal 1 interacts with the UE 2 via the relay terminal 2, the second discovery message carries the identifier of the relay terminal 1, an identifier of the relay terminal 2, and the identifier of the UE 2. In the case that a path 3 indicates that the relay terminal 1 interacts with the UE 2 via the relay terminal x, the second discovery message carries the identifier of the relay terminal 1, an identifier of relay terminal x, and the identifier of the UE 2. The relay terminal x is another relay terminal except the relay terminal 2 among the n second relay terminals.

**In process 3073,** the first terminal transmits a third request message to the first relay terminal.

Exemplarily, the third request message is used by the first terminal to instruct the first relay terminal to establish or modify the communication path directed to the second terminal via the second relay terminal, and the third request message carries the identifier of the second terminal and the identifier of the second relay terminal.

According to process 3072, in the case that n second relay terminals are present between the first relay terminal and the second terminal, the first terminal performs path selection to determine the communication path between the first relay terminal and the second terminal. Subsequently, in the case that the first terminal needs to communicate with the second terminal, the first terminal may transmit the third request message to the first relay terminal, such that the first relay terminal may establish or modify the communication path directed to the second terminal determined by the first terminal based on the third request message.

**In process 3082,** the first relay terminal transmits a fourth request message to the second relay terminal.

Exemplarily, the fourth request message is used by the first relay terminal to request to establish or modify the communication path directed to the second terminal via the second relay terminal.

It should be understood that the first terminal may also not determine the second relay terminal as the node on the communication path between the first terminal and the second terminal. In this case, the first terminal transmits a fifth request message to the first relay terminal, and the fifth request message is used for instructing to establish or modify communication connection between the first relay terminal and the second terminal by the first relay terminal. Based on this, the first relay terminal may directly establish or modify the communication path directed to the second terminal.

**In process 309,** the second relay terminal establishes or modifies the communication path directed to the second terminal.

After receiving the fourth request message, the second relay terminal may establish or modify the communication path directed to the second terminal, such that the first terminal may communicate with the second terminal via the first relay terminal and the second relay terminal sequentially.

It should be understood that the embodiments of the present disclosure only illustrate an implementation mode in which the first terminal communicates with the second terminal via the first relay terminal and the second relay terminal sequentially, in some embodiments, the first terminal may also not determine the second relay terminal as the node on the communication path between the first terminal and the second terminal, and the first terminal transmits the fifth request message to the first relay terminal, and in this case, processes 3082 and 309 are not performed.

It should be understood that the processes at the second relay terminal side, the first relay terminal side, and the first terminal side are separately implemented as the embodiments of the terminal discovery method. For specific description, reference may be made to the above content. The details are not described herein any further.

In summary, in the terminal discovery method according to the embodiments of the present disclosure, in the case that the second discovery message further carries the identifier of the second relay terminal, the first terminal may perform path selection to determine the communication path between the first terminal and the second terminal.

In some embodiments, after discovering the second terminal via the first relay terminal, the first terminal may transmit the third request message to the first relay terminal, the third request message being used for instructing the first relay terminal to establish or modify the communication path directed to the second terminal via the second relay terminal, such that the first terminal is capable of communicating with the second terminal via at least two relay terminals.

It should be understood that the plurality of above embodiments are only described in terms of the first terminal and the second terminal achieving communication via two relay terminals. In some embodiments, the first terminal discovers the second terminal via more than two relay terminals, and the first terminal establishes or modifies the communication path directed to second terminal via more than two relay terminals. The above embodiments are within the protection scope of the present disclosure. The specific implementation mode is similar to the above content, which may be taken as a reference, and is not described herein.

Exemplarily, using a scenario where the first terminal is a UE 1, the first relay terminal is a relay terminal 1, the second relay terminal is a relay terminal 2, and the second terminal is a UE 2 as an example, and a relay terminal x is another second relay terminal differing from the relay terminal 2, the terminal discovery method according to the embodiments of the present disclosure may be implemented as one of the following two modes:

### (1) The relay terminal 1 performs path selection.

In step 1, the UE 2 transmits a discovery declaration message 1 or a discovery response message 1.

The discovery declaration message 1 is actively transmitted by the UE 2 in a broadcast mode, and the discovery response message 1 is a response to the relay terminal 2 after the UE 2 receives a discovery request message 1 from the relay terminal 2. In some embodiments, the discovery declaration message 1 or the discovery response message 1 carries the identifier of the UE 2, for example, a user identifier of the UE 2 in an application layer. In some embodiments, a link layer packet structure of the discovery declaration message 1 or the discovery response message 1 carries a layer-2 ID of the UE 2.

In step 2, the relay terminal 2 generates a discovery declaration message 2 or a discovery response message 2.

The discovery declaration message 2 or the discovery response message 2 carries the identifier of relay terminal 2 in addition to the identifier of the UE 2, for example, a user identifier of the relay terminal 2 in the application layer. In some embodiments, a link layer packet structure of the discovery declaration message 2 or the discovery response message 2 carries a layer-2 ID of the relay terminal 2.

In step 3-1, the relay terminal 1 performs path selection.

The relay terminal 1 may receive the discovery declaration message 2 or the discovery response message 2 from the relay terminal 2, or may receive the discovery declaration message 2 or the discovery response message 2 from another relay terminal (e.g., relay terminal x), or may also directly receive the discovery declaration message or the discovery response message including the identifier of the UE 2 from the UE 2.

Based on this, the relay terminal 1 performs path selection. For example, the relay terminal 1 selects to directly interact with the UE 2; or the relay terminal 1 selects the relay terminal 2 as a relay terminal to reach the UE 2. The criteria for selection include, but are not limited to: the selection is performed based on the quality of the wireless signal.

Subsequently, the relay terminal 1 stores selected path information. For example, in the case that the relay terminal 1 selects to directly interact with the UE 2, the relay terminal 1 stores the user identifier of the UE 2 and the layer-2 ID corresponding to the UE 2. Alternatively, in the case that the relay terminal 1 selects the relay terminal 2 as the relay terminal that reaches the UE 2, the relay terminal 1 stores the user identifier of the UE 2, the user identifier of the relay terminal 2, a layer-2 ID of the UE 1, and the layer-2 ID of the relay terminal 2.

In step 4-1, the relay terminal 1 generates a discovery declaration message 3 or a discovery response message 3.

The discovery declaration message 3 or the discovery response message 3 carries an identifier of the relay terminal 1 in addition to the identifier of the UE 2, for example, a user identifier of the relay terminal 1 in the application layer. In some embodiments, a link layer packet structure of the discovery declaration message 3 or the discovery response message 3 carries a layer-2 ID of the relay terminal 1.

After the UE 1 receives the discovery declaration message 3 or the discovery response message 3 from the relay terminal 1, path selection may be performed. In some embodiments, in the case that the UE 1 determines to communicate with the UE 2 via the relay terminal 1, the UE 1 may transmit a request message for implementing link establishment/modification to the relay terminal 1, wherein the request message carries an identifier of a target UE (i.e., the UE 2), such that the relay terminal 1 transmits the request message for implementing link establishment/modification to the relay terminal 2 based on the path information stored in step 3-1.

### (2) UE 1 performs path selection.

In step 1, the UE 2 transmits a discovery declaration message 1 or a discovery response message 1.

The discovery declaration message 1 is actively transmitted by the UE 2 in a broadcast mode, and the discovery response message 1 is a response to the relay terminal 2 after the UE 2 receives a discovery request message 1 from the relay terminal 2. In some embodiments, the discovery declaration message 1 or the discovery response message 1 carries the identifier of the UE 2, for example, a user identifier of the UE 2 in an application layer. In some embodiments, a link layer packet structure of the discovery declaration message 1 or the discovery response message 1 carries a layer-2 ID of the UE 2.

In step 2, the relay terminal 2 generates a discovery declaration message 2 or a discovery response message 2.

The discovery declaration message 2 or the discovery response message 2 carries the identifier of the relay terminal 2 in addition to the identifier of the UE 2, for example, a user identifier of the relay terminal 2 in the application layer. In some embodiments, a link layer packet structure of the discovery declaration message 2 or the discovery response message 2 carries a layer-2 ID of the relay terminal 2.

In step 3-2, the relay terminal 1 generates a discovery declaration message 3 or a discovery response message 3.

Similar to step 3-1, the relay terminal 1 may receive the discovery declaration message 2 or the discovery response message 2 from the relay terminal 2, or may receive the discovery declaration message 2 or the discovery response message 2 from another relay terminal (e.g., relay terminal x), or may directly receive the discovery declaration message or the discovery response message including the identifier of the UE 2 from the UE 2.

Based on this, the relay terminal 1 generates the discovery declaration message 3 or the discovery response message 3.

The discovery declaration message 3 or the discovery response message 3 carries a plurality of pieces of optional path information. For example, in the case that path 1 is that the relay terminal 1 directly interacts with the UE 2, the discovery declaration message 3 or the discovery response message 3 carries the identifier of the relay terminal 1 and the identifier of the UE 2; in the case that path 2 is that the relay terminal 1 interacts with the UE 2 via the relay terminal 2, the discovery declaration message 3 or the discovery response message 3 carries the identifier of the relay terminal 1, the identifier of the relay terminal 2, and the identifier of the UE 2. In the case that path 3 is that the relay terminal 1 interacts with the UE 2 via the relay terminal x, the discovery declaration message 3 or the discovery response message 3 carries the identifier of the relay terminal 1, the identifier of the relay terminal x, and the identifier of the UE 2.

After the UE 1 receives the discovery declaration message 3 or the discovery response message 3 from the relay terminal 1, path selection may be performed, and the selected path is informed to the relay terminal 1. For example, the UE 1 transmits a request message for implementing link establishment/modification to the relay terminal 1, wherein the request message carries an identifier of a target UE (i.e., the UE 2) and the selected path information (e.g. the identifier of the relay terminal 2). Subsequently, the relay terminal 1 transmits a request message for implementing link establishment/modification to the relay terminal 2 based on the above request message.

The following are apparatus embodiments of the present disclosure. For details not described in the apparatus embodiments, reference may be made to the corresponding descriptions in the above method embodiments. The details are not described herein any further.

FIG. 10 is a schematic diagram of a terminal discovery apparatus according to some embodiments of the present disclosure. The apparatus includes:
a receiving module 1020, configured to receive a first discovery message from a second relay terminal.

The first discovery message is used by a first relay terminal to instruct a first terminal to discover a second terminal via the first relay terminal.

In some embodiments, the apparatus further includes a transmitting module 1040, configured to transmit a second discovery message to the first terminal, wherein the second discovery message is determined based on the first discovery message, and the second discovery message carries an identifier of the second terminal, or the second discovery message carries an identifier of the first relay terminal and the identifier of the second terminal.

In some embodiments, the apparatus further includes a storage module 1060, configured to determine the second relay terminal as a node on a communication path between the first relay terminal and the second terminal, and store first path information, wherein the first path information includes an identifier of the second relay terminal.

In some embodiments, the first path information further includes an identifier of the second terminal, wherein the identifier of the second terminal indicates that an end point of the communication path is the second terminal.

In some embodiments, the receiving module 1020 is further configured to receive a first request message from the first terminal, wherein the first request message is used by the first terminal to request to establish or modify the communication path directed to the second terminal via the first relay terminal, and the first request message carries the identifier of the second terminal.

In some embodiments, the apparatus further includes the transmitting module 1040, configured to transmit a second request message to the second relay terminal based on first path information, wherein the second request message is used by the first relay terminal to request to establish or modify the communication path directed to the second terminal via the second relay terminal.

In some embodiments, the second discovery message further carries the identifier of the second relay terminal, and the identifier of the second relay terminal indicates that the second relay terminal is a candidate node on the communication path between the first relay terminal and the second terminal.

In some embodiments, the receiving module 1020 is further configured to receive a third request message from the first terminal, wherein the third request message is used by the first terminal to instruct the first relay terminal to establish or modify the communication path directed to the second terminal via the second relay terminal, and the third request message carries the identifier of the second terminal and the identifier of the second relay terminal.

In some embodiments, the apparatus further includes the transmitting module 1040, configured to transmit a fourth request message to the second relay terminal, wherein the fourth request message is used by the first relay terminal to request to establish or modify the communication path directed to the second terminal via the second relay terminal.

In some embodiments, the identifier of each terminal and/or relay terminal includes at least one of a user identifier or a layer-2 identifier.

In some embodiments, the discovery message is a discovery declaration message or a discovery response message.

FIG. 11 is a schematic diagram of a terminal discovery apparatus according to some embodiments of the present disclosure. The apparatus includes:
a receiving module 1120, configured to receive a second discovery message from a first relay terminal.

The second discovery message is used to instruct a first terminal to discover a second terminal via the first relay terminal.

In some embodiments, the second discovery message carries an identifier of the second terminal, or the second discovery message carries an identifier of the first relay terminal and the identifier of the second terminal.

In some embodiments, the apparatus further includes a transmitting module 1140, configured to transmit a first request message to the first relay terminal, wherein the first request message is used by the first terminal to request to establish or modify a communication path directed to the second terminal via the first relay terminal, and the first request message carries the identifier of the second terminal.

In some embodiments, the second discovery message further carries the identifier of the second relay terminal, wherein the identifier of the second relay terminal indicates that the second relay terminal is a candidate node on the communication path between the first relay terminal and the second terminal.

In some embodiments, the apparatus further includes the transmitting module 1140, configured to transmit a third request message to the first relay terminal, wherein the third request message is used by the first terminal to instruct the first relay terminal to establish or modify the communication path directed to the second terminal via the second relay terminal, and the third request message carries the identifier of the second terminal and the identifier of the second relay terminal.

In some embodiments, the apparatus further includes a determining module 1160, configured to determine the second relay terminal as a node on the communication path between the first relay terminal and the second terminal.

In some embodiments, the identifier of each terminal and/or relay terminal includes at least one of a user identifier or a layer-2 identifier.

In some embodiments, the second discovery message is a discovery declaration message or a discovery response message.

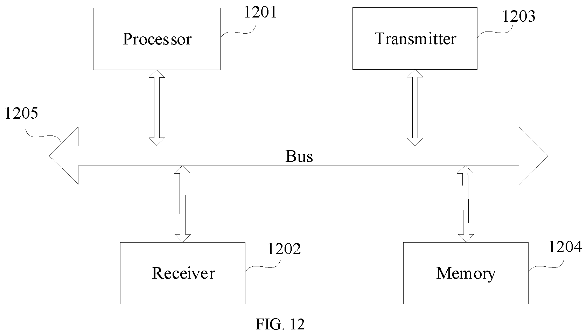

FIG. 12 is a schematic structural diagram of a communication device (a first relay terminal or a terminal) according to some embodiments of the present disclosure. The communication device includes: a processor 1201, a receiver 1202, a transmitter 1203, a memory 1204, and a bus 1205.

The processor 1201 includes one or more processing cores, and the processor 1201 runs various functional applications and performs information processing by running software programs and modules.

The receiver 1202 and the transmitter 1203 may be implemented as a communication assembly, which may be a communication chip.

The memory 1204 is connected to the processor 1201 via the bus 1205.

The memory 1204 is configured to store at least one instruction, and the processor 1201 is configured to load and execute the at least one instruction to perform the processes of the terminal discovery method mentioned in the above method embodiments.

In addition, the memory 1204 may be implemented using any type of volatile or non-volatile storage device or a combination thereof. The volatile or non-volatile storage device includes but not limited to: a magnetic or optical disk, an electrically-erasable programmable read-only memory (EEPROM), an erasable programmable read-only memory (EPROM), a static random access memory (SRAM), a read-only memory (ROM), a magnetic memory, a flash memory, or a programmable read-only memory (PROM).

The present disclosure further provides a first relay terminal. The first relay terminal includes a memory and a processor. The memory stores at least one program code, and the at least one program code, when loaded and executed by the processor, causes the processor to perform the terminal discovery method described above.

The present disclosure further provides a first terminal. The first terminal includes a memory and a processor. The memory stores at least one program code, and the at least one program code, when loaded and executed by the processor, causes the processor to perform the terminal discovery method described above.

The present disclosure further provides a computer-readable storage medium. The storage medium stores one or more computer programs. The one or more computer programs, when loaded and run by a processor, cause the processor to perform the terminal discovery method described above.

The present disclosure further provides a chip. The chip includes a programmable logic circuit and/or one or more program instructions. An electronic device equipped with the chip, when running, is caused to perform the terminal discovery method described above.

The present disclosure further provides a computer program product. The computer program product includes computer instructions stored in a computer-readable storage medium, and a processor reads and executes the computer instructions from the computer-readable storage medium to perform the terminal discovery method described above.

Described above are merely exemplary embodiments of the present disclosure and are not intended to limit the present disclosure. Any modifications, equivalent substitutions, improvements, or the like, made within the spirit and principle of the present disclosure should fall within the protection scope of the present disclosure.

## Claims

1. A terminal discovery method, applicable to a first relay terminal, the method comprising:
receiving a first discovery message from a second relay terminal;
wherein the first discovery message is used by the first relay terminal to instruct a first terminal to discover a second terminal via the first relay terminal.

2. The terminal discovery method according to claim 1, further comprising:
transmitting a second discovery message to the first terminal;
wherein the second discovery message is determined based on the first discovery message, and the second discovery message carries an identifier of the second terminal, or the second discovery message carries an identifier of the first relay terminal and an identifier of the second terminal.

3. The terminal discovery method according to claim 1 or 2, further comprising:
determining the second relay terminal as a node on a communication path between the first relay terminal and the second terminal; and
storing first path information, wherein the first path information comprises an identifier of the second relay terminal.

4. The terminal discovery method according to claim 3, wherein the first path information further comprises an identifier of the second terminal, wherein the identifier of the second terminal indicates that an end point of the communication path is the second terminal.

5. The terminal discovery method according to claim 3, further comprising:
receiving a first request message from the first terminal;
wherein the first request message is used by the first terminal to request to establish or modify a communication path directed to the second terminal via the first relay terminal, and the first request message carries the identifier of the second terminal.

6. The terminal discovery method according to claim 5, further comprising:
transmitting a second request message to the second relay terminal based on the first path information;
wherein the second request message is used by the first relay terminal to request to establish or modify the communication path directed to the second terminal via the second relay terminal.

7. The terminal discovery method according to claim 2, wherein the second discovery message further carries an identifier of the second relay terminal, wherein the identifier of the second relay terminal indicates that the second relay terminal is a candidate node on a communication path between the first relay terminal and the second terminal.

8. The terminal discovery method according to claim 7, further comprising:
receiving a third request message from the first terminal;
wherein the third request message is used by the first terminal to instruct the first relay terminal to establish or modify a communication path directed to the second terminal via the second relay terminal, and the third request message carries the identifier of the second terminal and the identifier of the second relay terminal.

9. The terminal discovery method according to claim 8, further comprising:
transmitting a fourth request message to the second relay terminal;
wherein the fourth request message is used by the first relay terminal to request to establish or modify the communication path directed to the second terminal via the second relay terminal.

10. The terminal discovery method according to any one of claims 2 to 9, wherein the identifier of each terminal and/or relay terminal comprises at least one of a user identifier or a layer-2 identifier.

11. The terminal discovery method according to any one of claims 1 to 10, wherein each discovery message is a discovery declaration message or a discovery response message.

12. A terminal discovery method, applicable to a first terminal, the method comprising:
receiving a second discovery message from a first relay terminal;
wherein the second discovery message is used for instructing the first terminal to discover a second terminal via the first relay terminal.

13. The terminal discovery method according to claim 12, wherein the second discovery message carries an identifier of the second terminal, or the second discovery message carries an identifier of the first relay terminal and an identifier of the second terminal.

14. The terminal discovery method according to claim 12 or 13, further comprising:
transmitting a first request message to the first relay terminal;
wherein the first request message is used by the first terminal to request to establish or modify a communication path directed to the second terminal via the first relay terminal, and the first request message carries an identifier of the second terminal.

15. The terminal discovery method according to claim 13, wherein the second discovery message further carries an identifier of a second relay terminal, wherein the identifier of the second relay terminal indicates that the second relay terminal is a candidate node on a communication path between the first relay terminal and the second terminal.

16. The terminal discovery method according to claim 15, further comprising:
transmitting a third request message to the first relay terminal;
wherein the third request message is used by the first terminal to instruct the first relay terminal to establish or modify a communication path directed to the second terminal via the second relay terminal, and the third request message carries the identifier of the second terminal and the identifier of the second relay terminal.

17. The terminal discovery method according to claim 16, further comprising:
determining the second relay terminal as a node on the communication path between the first relay terminal and the second terminal.

18. The terminal discovery method according to any one of claims 13 to 17, wherein the identifier of each terminal and/or relay terminal comprises at least one of a user identifier or a layer-2 identifier.

19. The terminal discovery method according to any one of claims 12 to 18, wherein the second discovery message is a discovery declaration message or a discovery response message.

20. A terminal discovery apparatus, comprising:
a receiving module, configured to receive a first discovery message from a second relay terminal;
wherein the first discovery message is used by a first relay terminal to instruct a first terminal to discover a second terminal via the first relay terminal.

21. The terminal discovery apparatus according to claim 20, further comprising:
a transmitting module, configured to transmit a second discovery message to the first terminal;
wherein the second discovery message is determined based on the first discovery message, and the second discovery message carries an identifier of the second terminal, or the second discovery message carries an identifier of the first relay terminal and an identifier of the second terminal.

22. The terminal discovery apparatus according to claim 20 or 21, further comprising:
a storage module, configured to determine the second relay terminal as a node on a communication path between the first relay terminal and the second terminal, and store first path information, wherein the first path information comprises an identifier of the second relay terminal.

23. The terminal discovery apparatus according to claim 22, wherein
the first path information further comprises an identifier of the second terminal, wherein the identifier of the second terminal indicates that an end point of the communication path is the second terminal.

24. The terminal discovery apparatus according to claim 22, wherein
the receiving module is further configured to receive a first request message from the first terminal;
wherein the first request message is used by the first terminal to request to establish or modify a communication path directed to the second terminal via the first relay terminal, and the first request message carries the identifier of the second terminal.

25. The terminal discovery apparatus according to claim 24, further comprising:
the transmitting module, configured to transmit a second request message to the second relay terminal based on the first path information;
wherein the second request message is used by the first relay terminal to request to establish or modify the communication path directed to the second terminal via the second relay terminal.

26. The terminal discovery apparatus according to claim 21, wherein
the second discovery message further carries an identifier of a second relay terminal, wherein the identifier of the second relay terminal indicates that the second relay terminal is a candidate node on the communication path between the first relay terminal and the second terminal.

27. The terminal discovery apparatus according to claim 26, wherein
the receiving module is further configured to receive a third request message from the first terminal; wherein the third request message is used by the first terminal to instruct the first relay terminal to establish or modify the communication path directed to the second terminal via the second relay terminal, and the third request message carries the identifier of the second terminal and the identifier of the second relay terminal.

28. The terminal discovery apparatus according to claim 27, further comprising:
the transmitting module, configured to transmit a fourth request message to the second relay terminal;
wherein the fourth request message is used by the first relay terminal to request to establish or modify the communication path directed to the second terminal via the second relay terminal.

29. The terminal discovery apparatus according to any one of claims 21 to 28, wherein the identifier of each terminal and/or relay terminal comprises at least one of a user identifier or a layer-2 identifier.

30. The terminal discovery apparatus according to any one of claims 20 to 29, wherein each discovery message is a discovery declaration message or a discovery response message.

31. A terminal discovery apparatus, comprising:
a receiving module, configured to receive a second discovery message from a first relay terminal;
wherein the second discovery message is used to instruct a first terminal to discover a second terminal via the first relay terminal.

32. The terminal discovery apparatus according to claim 31, wherein
the second discovery message carries an identifier of the second terminal, or the second discovery message carries an identifier of the first relay terminal and an identifier of the second terminal.

33. The terminal discovery apparatus according to claim 31 or 32, further comprising:
a transmitting module, configured to transmit a first request message to the first relay terminal;
wherein the first request message is used by the first terminal to request to establish or modify a communication path directed to the second terminal via the first relay terminal, and the first request message carries an identifier of the second terminal.

34. The terminal discovery apparatus according to claim 32, wherein
the second discovery message further carries an identifier of a second relay terminal, wherein the identifier of the second relay terminal indicates that the second relay terminal is a candidate node on the communication path between the first relay terminal and the second terminal.

35. The terminal discovery apparatus according to claim 34, further comprising:
a transmitting module, configured to transmit a third request message to the first relay terminal;
wherein the third request message is used by the first terminal to instruct the first relay terminal to establish or modify the communication path between directed to the second terminal via the second relay terminal, and the third request message carries the identifier of the second terminal and the identifier of the second relay terminal.

36. The terminal discovery apparatus according to claim 35, further comprising:
a determining module, configured to determine the second relay terminal as a node on the communication path between the first relay terminal and the second terminal.

37. The terminal discovery apparatus according to any one of claims 32 to 36, wherein the identifier of each terminal and/or relay terminal comprises at least one of a user identifier or a layer-2 identifier.

38. The terminal discovery apparatus according to any one of claims 31 to 37, wherein the second discovery message is a discovery declaration message or a discovery response message.

39. A first relay terminal, comprising: a memory and a processor;
wherein the memory is configured to store at least one program code, wherein the processor, when loading and running the at least one program code, causes the first relay terminal to perform the terminal discovery method as defined in any one of claims 1 to 11.

40. A first terminal, comprising: a memory and a processor;
wherein the memory is configured to store at least one program code, wherein the processor, when loading and running the at least one program code, causes the first terminal to perform the terminal discovery method as defined in any one of claims 12 to 19.

41. A computer-readable storage medium, storing one or more computer programs, wherein the one or more computer programs, when loaded and run by a processor, cause the processor to perform the terminal discovery method as defined in any one of claims 1 to 19.

42. A chip, comprising: a programmable logic circuit and/or one or more program instructions, wherein an electronic device equipped with the chip, when running, is caused to perform the terminal discovery method as defined in any one of claims 1 to 19.

43. A computer program product, comprising one or more computer instructions stored in a computer-readable storage medium, wherein the one or more computer instructions, when read from the computer-readable storage medium and executed by a processor, cause the processor to perform the terminal discovery method as defined in any one of claims 1 to 19.
